# EUROPÄISCHE PATENTSCHRIFT

(11) **EP 1 378 386 B1**
(45) Veröffentlichungstag und Bekanntmachung des Hinweises auf die Patenterteilung: **28.12.2005**
(21) Anmeldenummer: 03011788.1
(22) Anmeldetag: 24.05.2003
(51) Int. Cl.: B60J 7/16, B60N 3/02, B60R 7/10

(54) **Fahrerhaus mit Dachluke**
Driver's cab with a ventilating hatch
Cabine de conducteur avec une lucarne

(30) Priorität: 06.07.2002 DE 10230441
(43) Veröffentlichungstag der Anmeldung: 07.01.2004
(73) Patentinhaber: DaimlerChrysler AG, 70567 Stuttgart (DE)
(72) Erfinder: Krug, Hubert, 76571 Gaggenau (DE); Mattedi, Markus, 72141 Walddorfhäslach (DE); Tanudjaja, Herry, 75391 Gechingen (DE); Zygan, Andreas, 76316 Malsch (DE)

(56) Entgegenhaltungen:
- EP-A- 0 249 268
- DE-C- 19 946 500
- DE-U- 9 313 437
- US-A- 5 625 921

## Beschreibung

Die Erfindung betrifft ein Fahrerhaus für Fahrzeuge nach den, in der DE 9313437U offenbarten Merkmalen des Oberbegriffs des Anspruchs 1.

Aus der Praxis sind vielfältige Ausführungen von Fahrerhäusern bekannt, die Dachluken und im Innenbereich Haltegriffe aufweisen.

Es ist aus der DE 93 13 437 U eine Dachluke mit einer manuell oder automatisch betätigbaren Ausstellvorrichtung bekannt, welche über Handgriffe bedienbar ist.

Aus der DE 33 22 575 A1 ist eine Dachluke bekannt, die Handgriffe zum Öffnen und/oder Schließen der Dachluke aufweist. Diese Handgriffe sind mit einem Federmechanismus verbunden, um die Dachluke komfortabel zu Öffnen oder zu Schließen. Nachteilig ist hier, dass die Handgriffe eine relativ geringe Stabilität aufweisen.

Die DE 299 14 749 U1 zeigt ein Fahrerhaus, mit einer an der Rückwand des Innenraumes angeordneten Haltestange. Solche Halteelemente zerklüften den Innenraum des Fahrerhauses und stellen ein potenzielles Verletzungsrisiko dar.

Die US 5,625,921 A zeigt einen an einem Dachhimmel eines Fahrzeugs angeordneten Haltegriff, welcher Haken zum Aufhängen von Kleiderbügeln aufweist.

Es ist Aufgabe der vorliegenden Erfindung, ein Fahrerhaus mit Dachluke zu schaffen, das komfortabel ist, möglichst kompakt ausgebildet ist und einen möglichst unzerklüfteten Innenraum mit geringem Verletzungspotenzial aufweist.

Diese Aufgabe wird erfindungsgemäß durch ein Fahrerhaus nach den Merkmalen des Anspruchs 1 gelöst.

Die Dachluke des Fahrerhauses weist eine Haltestange auf, die zum einen als Griffstange und zum anderen als Kleiderstange ausgebildet ist. Durch die Ausbildung der Haltestange als Griffstange, kann diese als Einstiegshilfe in eine Liege des Fahrerhauses dienen. Zusätzliche Haltegriffe im Innenraum des Fahrerhauses können somit entfallen. Die Ausbildung der Haltestange als Kleiderstange ermöglicht es, dass die Dachluke zum Lüften von Textilien geeignet ist.

In Fahrerhäusern von Lastkraftwagen sind die Platzverhältnisse relativ beschränkt. Die Fahrer und Beifahrer müssen somit oftmals zu provisorischen Notbehelfen greifen, um z. B. nasse Handtücher zu trocknen oder Kleidungsstücke zu lüften. Über die Haltestange können Handtücher und/oder Kleidungsstücke im Bereich der Dachluke einfach und komfortabel aufgehängt werden. Dort werden sie bei geöffneter Dachluke durch die dann vorhandene Luftströmung hervorragend gelüftet und/oder getrocknet. Die Haltestange ist starr ausgebildet, so dass bei einem Verstellen der Dachluke keine Gefahr besteht, dass die aufgehängten Handtücher und/oder Kleidungsstücke verrutschen und/oder herabfallen. Die Dachluke ist vorzugsweise mittig in dem Fahrzeugdach angeordnet, so dass unterhalb der Dachluke genügend Platz vorhanden ist, um selbst lange Kleidungsstücke aufzuhängen.

Die Haltestange kann unterhalb der Dachluke innerhalb im Bereich der Öffnung angeordnet sein, vorzugsweise in etwa bündig mit dem Dachhimmel des Fahrerhauses. So greift die Haltestange nicht oder nur wenig in den Kopfraum des Fahrerhauses ein. Auch wird die Verletzungsgefahr minimiert, da die Dachluke keine weit in den Innenraum hineinragende Teile aufweist.

In einer Ausführung ist vorgesehen, dass die Dachluke einen Rahmen aufweist, der um die Dachluke umlaufend ausgebildet und mit dem Fahrzeugdach verbunden ist. Dieser Rahmen kann als optische Abdeckung und/oder Blende ausgebildet sein und die Öffnung der Dachluke seitlich zu dem Fahrzeugdach hin abschließen.

Es ist möglich, die Haltestange zu beiden Seiten der Dachluke unmittelbar mit den Fahrzeugdach, bzw. mit tragenden Strukturen des Fahrzeugdaches zu verbinden. Die Haltestange kann jedoch auch mittelbar mit dem Fahrzeugdach verbunden sein, indem sie mit dem umlaufenden Rahmen verbunden ist, der seinerseits wiederum fest mit dem Fahrzeugdach verbunden ist. Die Enden der Haltestange können in den Rahmen eingreifend oder auf dem Rahmen aufliegend ausgebildet sein.

In einer Ausführung ist vorgesehen, dass die Dachluke eine Betätigungsvorrichtung mit einem automatischen Antrieb, vorzugsweise einem Elektromotor, aufweist. Der Antrieb ist zum Öffnen und/oder Schließen der Dachluke ausgebildet. Über Bedienelemente ist die Betätigungsvorrichtung bedienbar. Es ist auch vorgesehen, dass die Betätigungsvorrichtung ferngesteuert, z. B. vom Armaturenbrett aus oder automatisch ansteuerbar ist. Die Betätigungsvorrichtung kann verdeckt im Bereich des Fahrzeugdaches oder in dem umlaufenden Rahmen angeordnet sein. Dadurch bleibt die Öffnung der Dachluke unverbaut.

Es ist vorgesehen, dass die Dachluke in ihrer Schließstellung verriegelbar ist, um ein unbefugtes Öffnen der Dachluke zu verhindern. Die Dachluke kann auch in einer Offenstellung oder in einer Zwischenstellung verriegelbar sein, um auch bei geöffneter Dachluke einen unbefugten Zugriff in das Fahrerhaus zu verhindern. Vorzugsweise ist die Betätigungsvorrichtung so ausgebildet, das am Ende eines Öffnungs- und/oder Schließvorganges ein Elektromotor die Dachluke verriegelt.

Um eine bequeme Handhabung der Haltestange zu ermöglichen, ist vorgesehen, dass der Abstand zwischen einer eine Öffnung der Dachluke verschließende Haube und der Haltestange auch bei geschlossener Haube zumindest 5 cm beträgt. Dieses ermöglicht ein behinderungsfreies und bequemes umgreifen der Haltestange.

Weitere Merkmale und Vorteile der Erfindung ergeben sich aus der nachfolgenden beispielhaften Figurenbeschreibung und anhand der Zeichnungen.

Dabei zeigen:
- Fig. 1: eine seitliche Darstellung eines Fahrerhauses mit Dachluke,
- Fig. 2: eine Darstellung einer Dachluke mit Haltestange von unten,
- Fig. 3: eine Darstellung einer Dachluke mit Blendrahmen;

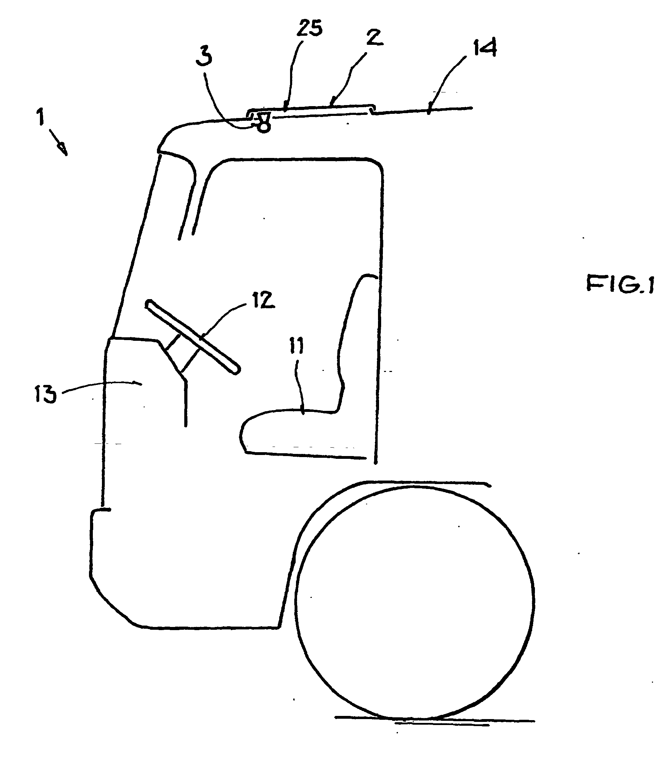

In **Figur 1** ist ein Fahrerhaus 1 eines Lastkraftwagens dargestellt. Das Fahrerhaus 1 weist ein Cockpit 13 mit Bedienelementen und einem Lenkrad 12 auf. In dem Fahrerhaus sind zudem Sitze 11, insbesondere ein Fahrersitz und ein Beifahrersitz in Fahrtrichtung nebeneinander angeordnet. Im Dachbereich 14 des Fahrerhauses 1 ist eine Dachluke 2 angeordnet. Die Dachluke 2 ist etwa mittig in das Dach 14 der Fahrerkabine eingelassen und kann z. B. zu Lüftungszwecken geöffnet werden. Eine Haltestange 3 ist unterhalb, im Bereich der Öffnung der Dachluke 2 angeordnet.

Die Haltestange 3 ist mechanisch stabil ausgebildet und kann als Haltegriff benutzt werden. Insbesondere ist vorgesehen, dass die Haltestange 3 als Einstiegshilfe für eine im Rückwandbereich der Fahrerkabine 1 angeordnete Liege dient. Vor allem bei Fahrerkabinen für zwei Personen mit zwei übereinander angeordneten Liegen ist die Haltestange 3 als Einstiegshilfe für die obere Liege hilfreich.

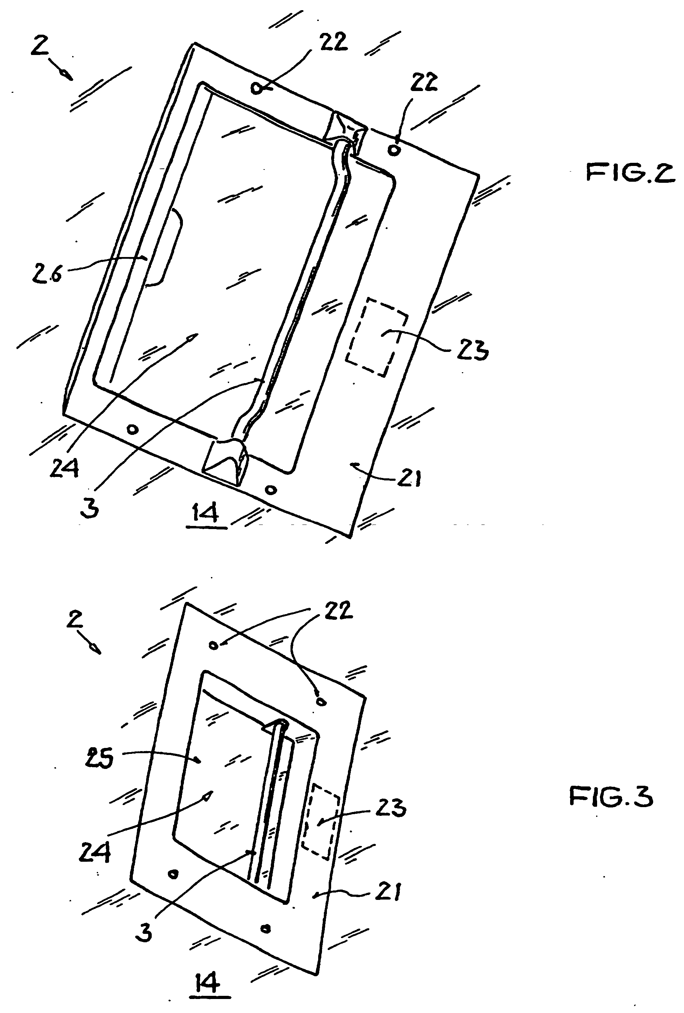

Die Dachluke 2 weist, wie in den **Figuren 2 und 3** dargestellt, eine Öffnung 24 auf, die mit einer durchsichtigen Haube 25, die z. B. aus einem Kunststoff oder Glas ausgebildet ist, verschließbar ist. Über ein unterhalb der Haube 25 angeordnetes Sonnenschutzrollo 26 kann die Haube 25 abgedunkelt werden. Ein um die Öffnung 24 umlaufender Rahmen 21 schafft die Verbindung zwischen der Dachluke 2 und dem Dach 14 der Fahrerkabine 1 und haltert das Sonnenschutzrollo 26. Der Rahmen 21 ist mittels Schrauben oder Nieten 22 fest mit dem Dach 14 des Fahrerhauses 1 verbunden. Zudem schafft der Rahmen 21 einen optischen Übergang von der Dachluke 2 zu dem Dachbereich 14 des Fahrerhauses 1.

In dem Rahmen 21 ist eine Betätigungsvorrichtung 23 verdeckt aufgenommen. Diese weist einen Elektromotor auf, der über ein im Rahmen 21 verdeckt geführtes Scherengestänge die Haube 25 der Dachluke 2 öffnet und/oder schließt. Das Scherengestänge ist selbsthemmend ausgebildet, so dass die Dachluke 2 in jeder Öffnungs- bzw. Schließstellung der Haube 25 verriegelt ist. Über im Bereich des Cockpits 13 angeordnete Bedienelemente kann die Betätigungsvorrichtung 23 angesteuert werden.

Die Haltestange 3 ist im Bereich der Öffnung 24 der Dachluke 2 so angeordnet, dass der Abstand zwischen der Haube 25 und der Haltestange 3 auch bei geschlossener Dachluke 2 zumindest 5 cm oder mehr beträgt. Die Haltestange 3 greift mit ihren beiden Enden beiderseits über die Öffnung 24 der Dachluke 2 hinaus. Die beiden Enden der Haltestange sind fest mit dem Dach 14 des Fahrerhauses 1 verbunden, so dass die Haltestange 3 starr und belastbar ausgebildet ist.

In der Figur 2 weist der Rahmen 21 angeformte Aufnahmen für die Enden der Haltestange 3 auf. Diese ist in den Aufnahmen des Rahmens 21 gehaltert und mittelbar über diesen mit dem Fahrzeugdach verbunden.

In der in Figur 3 gezeigten Ausführung ist die Haltestange 3 unmittelbar mit dem Dach 14 des Fahrerhauses 1 verbunden. Der Rahmen 21 ist hier als Blendrahmen ausgebildet, der die Enden der Haltestange abdeckt. Der Rahmen 21 weist in seinen Seitenwänden Aussparungen auf, durch die die Enden der Haltestange 3 hindurchgreifen.

Die Haltestange 3 ist bündig mit dem Fahrzeugdach 14 abschließend ausgeführt, so dass die Dachluke 2 keine in das Fahrerhaus 1 hineinragenden Teile aufweist. Dadurch wird die Gefahr einer Verletzung für Fahrer und/oder Beifahrer, z. B. im Falle eines Crash deutlich reduziert.

Die Haltestange 3 ist als Handtuchhalter und/oder als Kleiderstange ausgebildet. Textilien können daher an der Haltestange 3 aufgehängt werden. Bei geöffneter Haube 25, stellt sich eine Konvektion ein, bei der ein Luftaustausch zwischen Fahrerhaus 1 und Umgebung durch die Dachluke 2 hindurch stattfindet. Die an der Haltestange 3 aufgehängten Textilien befinden sich innerhalb des Luftstromes, der durch diese Konvektion verursacht wird. Dadurch werden die an der Haltestange 3 aufgehängten Textilien hervorragend gelüftet und/oder getrocknet.

Die Haltestange 3 ist so angeordnet, dass unterhalb der Haltestange 3 ausreichend Platz ist, so dass auch längere Kleidungsstücke, wie z.B. Mäntel oder Hosen problemlos an der Haltestange 3 aufgehängt werden können.

## Patentansprüche

1. Fahrerhaus für Fahrzeuge, vorzugsweise Lastkraftwagen, mit einer im Dachbereich angeordneten Dachluke (2), die mittels einer Betätigungsvorrichtung von innen her zu Öffnen und/oder zu Schließen ist, wobei die Betätigungsvorrichtung einen elektrischen Antrieb aufweist, der die Dachluke (2) öffnet und/oder schließt und die Dachluke (2) in Schließstellung und/oder Offenstellung und/oder einer Zwischenstellung verriegelt,
**dadurch gekennzeichnet,**
**dass** die Dachluke (2) zum Lüften von Handtüchern und/oder Kleidungsstücken ausgebildet ist, indem sie eine Haltestange (3) aufweist, die zum einen als Griffstange und zum anderen als Kleiderstange ausgebildet ist und wobei die Haltestange (3) als bezüglich des Fahrzeugdaches starre Haltestange (3) ausgebildet ist um zu Verhindern, dass bei einem Verstellen der Dachluke die aufgehängten Handtücher und/oder Kleidungsstücke verrutschen oder herabfallen.

2. Fahrerhaus nach Anspruch 1,
**dadurch gekennzeichnet,**
**dass** sich die Haltestange (3) im Bereich der Öffnung (24) der Dachluke (2) so angeordnet ist, dass sie mit ihren beiden Enden über die lichte Weite der Öffnung (24) der Dachluke (2) hinausgreift und an beiden Enden fest mit dem Fahrzeugdach (14) verbunden ist.

3. Fahrerhaus nach Anspruch 2,
**dadurch gekennzeichnet,**
**dass** die Dachluke (2) einen um die Öffnung (24) herum umlaufenden Rahmen (21) aufweist, der mit fest dem Fahrzeugdach (14) verbunden ist und die Haltestange (3) mit dem Rahmen (21) verbunden ist.

4. Fahrerhaus nach Anspruch 2,
**dadurch gekennzeichnet,**
**dass** die Dachluke (2) einen um die Öffnung (24) herum umlaufenden Rahmen (21) aufweist, der mit fest dem Fahrzeugdach (14) verbunden ist und Aussparungen aufweist, durch die die Enden der Haltestange (3) hindurchgreifen.

5. Fahrerhaus nach einem der Ansprüche 1 bis 4,
**dadurch gekennzeichnet,**
**dass** die Dachluke eine Öffnung (24) und eine diese Öffnung verschließende Haube(25) aufweist und der Abstand zwischen der Haube (25) und der Haltestange (3) bei geschlossener Haube größer als 5 cm ist.

## Claims

1. Driver's cab for vehicles, preferably heavy goods vehicles, with a roof light (2) which is arranged in the roof region and which is to be opened and/or closed from inside by means of an actuating device, the actuating device having an electric drive which opens and/or closes the roof light (2) and locks the roof light (2) in the closed position and/or open position and/or in an intermediate position, **characterized in that** the roof light (2) is designed for the aeration of towels and/or articles of clothing, **in that** it has a holding rod (3) which is designed, on the one hand, as a grip rod and, on the other hand, as a clothes rod, the holding rod (3) being designed as a holding rod (3) which is rigid with respect to the vehicle roof, in order to prevent the hung-up towels and/or articles of clothing from slipping out of place or falling off when the roof light is adjusted.

2. Driver's cab according to Claim 1, **characterized in that** the holding rod (3) is arranged in the region of the aperture (24) of the roof light (2) in such a way that the said holding rod spans with its two ends the clear width of the aperture (24) of the roof light (2) and is fixedly connected at both ends to the vehicle roof (14).

3. Driver's cab according to Claim 2, **characterized in that** the roof light (2) has a frame (21) which runs around the aperture (24) and which is fixedly connected to the vehicle roof (14), and the holding rod (3) is connected to the frame (21).

4. Driver's cab according to Claim 2, **characterized in that** the roof light (2) has a frame (21) which runs around the aperture (24) and which is fixedly connected to the vehicle roof (14) and has clearances through which the ends of the holding rod (3) engage.

5. Driver's cab according to one of Claims 1 to 4, **characterized in that** the roof light has an aperture (24) and a cowl (25) closing this aperture, and the distance between the cowl (25) and the holding rod (3), with the cowl closed, is greater than 5 cm.

## Revendications

1. Cabine de conducteur pour véhicules, de préférence véhicules poids lourds, comprenant une lucarne (2) disposée dans la région du toit, qui peut être ouverte et/ou fermée depuis l'intérieur au moyen d'un dispositif d'actionnement, le dispositif d'actionnement présentant un entraînement électrique qui ouvre et/ou ferme la lucarne (2) et verrouille la lucarne (2) dans la position de fermeture et/ou dans la position d'ouverture et/ou dans une position intermédiaire,
**caractérisée en ce que**
la lucarne (2) est réalisée pour l'aération de serviettes et/ou de vêtements du fait qu'elle présente une barre de suspension (3) qui est réalisée d'une part en tant que barre de préhension et d'autre part en tant que barre pour vêtements et où la barre de suspension (3) est réalisée en tant que barre de suspension rigide (3) par rapport au toit du véhicule pour empêcher que lors du réglage de la lucarne, les serviettes et/ou les vêtements suspendus ne glissent ou ne tombent.

2. Cabine de conducteur selon la revendication 1,
**caractérisée en ce que**
la barre de suspension (3) est disposée dans la région de l'ouverture (24) de la lucarne (2) de telle sorte qu'elle vienne en prise avec ses deux extrémités au-delà des dimensions intérieures de l'ouverture (24) de la lucarne (2) et qu'elle soit fixement connectée aux deux extrémités au toit du véhicule (14).

3. Cabine de conducteur selon la revendication 2, **caractérisée en ce que** la lucarne (2) présente un cadre (21) entourant l'ouverture (24), lequel est connecté fixement au toit du véhicule (14) et **en ce que** la barre de suspension (3) est connectée au cadre (21).

4. Cabine de conducteur selon la revendication 2,
**caractérisée en ce que**
la lucarne (2) présente un cadre (21) entourant l'ouverture (24), lequel est connecté fixement au toit du véhicule (14) et présente des évidements à travers lesquels viennent en prise les extrémités de la barre de suspension (3).

5. Cabine de conducteur selon l'une quelconque des revendications 1 à 4,
**caractérisée en ce que**
la lucarne présente une ouverture (24) et un volet (25) fermant cette ouverture et la distance entre le volet (25) et la barre de suspension (3) lorsque le volet est fermé est supérieure à 5 cm.
